# EUROPEAN PATENT SPECIFICATION

(11) **EP 1 420 286 B1**
(45) Date of publication and mention of the grant of the patent: **28.12.2005**
(21) Application number: 02396170.9
(22) Date of filing: 14.11.2002
(51) Int. Cl.: G02F 1/1333

(54) **Method of manufacturing an information display and an information display**
Verfahren zur Herstellung einer Informationsanzeige und eine Informationsanzeige
Procédé de fabrication d'un affichage d'information et un affichage d'information

(43) Date of publication of application: 19.05.2004
(73) Proprietor: Mitron OY, 30100 Forssa (FI)
(72) Inventor: Ylander, Kimmo, 30300 Forssa (FI)
(74) Representative: Pursiainen, Timo Pekka

(56) References cited:
- US-A- 6 005 649
- US-A1- 2002 008 809
- US-B1- 6 249 329
- US-B1- 6 262 696

## Description

### Technical field

The present invention relates to a method of manufacturing a display module comprising mounting on one base plate at least two liquid crystal display elements having two sheets of glass, sealed together and having liquid crystals in between and one of the sheets of glass is coated with a transparent metal oxide film for providing pixels, fixing at least one controller for controlling visual properties of said pixels on the base plate having a first surface and a second surface, and forming a wiring between said at least one controller and each of the liquid crystal display elements to provide signal transferring connection between the controller and the pixels of the liquid crystal display elements. The invention further relates to a display module comprising at least two liquid crystal display elements fixed on one base plate having a first surface and a second surface, the liquid crystal display elements having two sheets of glass, sealed together and having liquid crystals in between, and pixels, at least one controller fixed on the base plate for controlling visual properties of said pixels by changing the transparency of the pixels, and wiring from said at least one controller to said at least two liquid crystal display elements to provide signal transferring connection between said at least one controller and the pixels of the liquid crystal display elements.

### Discussion of the related art

information displays comprising a set of pixels are known: The pixels are typically arranged in an array on a back plate wherein different information can be presented on the information display by changing the visual properties of the pixels. In so called monochromatic displays each pixel can be set either to transparent or non-transparent state. When a pixel is set to the transparent state the back plate can be seen. Respectively, when a pixel is set to non-transparent state the back plate is not visible through the pixel. Therefore, the pixels in different states can visually be distinguished from each other.

Information displays for outdoor use are typically based on LED-displays or mechanical displays in which a matrix of two-coloured flaps form the display area. The flaps can be turned around to change the colour of the display (split-flap display) to form the desired image. There are some disadvantages in these kind of displays. The LED-displays emit light and the brightness of the light is limited. This means that, for example, in direct sunlight the LED-displays are useless without special arrangements, because the brightness of the sunlight is multifold compared with the brightness of the LEDs. The split-flap displays comprise mechanical parts which wear during operation. Therefore they need regular maintenance and the lifetime of the mechanics is limited.

Prior art liquid crystal display based information displays for outdoor use comprise typically a number of smaller liquid crystal displays (LCD) which are mounted on a base plate side by side. However, each of such smaller liquid crystal displays need a seam allowance at least on two edges of the liquid crystal display. When such liquid crystal displays are mounted side by side, the seam allowance is even doubled and it is clearly visible on such information displays

The document US-2002/0008809 , on which the preambles of claims 1 and 5 are based, discloses a method of manufacturing a display from a multiple of small flat-panels (tiles). The panels can be installed on the same substrate. There are also row- and column driver inputs for each panel of the display so that the same row driver drives all the panels in the same row and, respectively, the same column driver drives all the panels in the same column. It is also disclosed that all the panels may have a controller of their own. The signals and necessary voltages to the panels can be connected via flexible cables.

The document US-6,005,649 discloses a display consisting of a plurality of microdisplays. The microdisplays are attached to a common substrate which is thermally matched with the material of the microdisplays. According to D2 the microdisplays can be assembled in a matrix form so that each microdisplay has at least exposed one extemal edge and from one to three internal edges. Therefore, only arrays of one or two rows or arrays of one or two columns can be used (1 x N, 2 N, N x 1, N x 2). The substrate can be used to provide wiring from edges of the display to the individual microdisplays.

The document US-6,262,696 also discloses a tiled flat panel display. The tile display modules of the display are aligned such that the interpixel spacing between two adjacent tiles maintains the uniformly periodic spacing of the interpixel spacing within tiles. The tile display modules are mouned on a common substrate and electrically interconnected to replicate the function of a large area display.

### Objectives and summary of the invention

It is thus an object of this invention to provide a method of manufacturing an information display, and an improved information display. These objectives are achieved by a method of manufacturing a display module as defined in claim 1 and by a display module as defined in claim 5. The present invention is based on the idea that a common base plate is used for both the liquid crystal display elements and the controllers, wherein the liquid crystal display elements are fixed on one surface of the base plate and the controllers are fixed on the opposite surface of the base plate. The fixing of the liquid crystal display elements and the controllers is advantageously performed by using double sided tape or glue. A method according to the present invention is characterized in that the method further comprises forming the back plate from a coloured, transflective material, wherein the back plate provides the colour for a pixel when it is set to at least partly transparent state and operates as an optical filter.

A display module according to the present invention is characterized in that the back plate is used to provide the colour for such a pixel which is set to at least partly transparent state, and in that the base plate is formed by using transflective material, wherein the base plate is used as an optical filter.

An information display according to the present invention is primarily characterized in that at least two liquid crystal display elements are fixed on one base plate.

The present invention provides significant advantages over prior art information displays and methods for manufacturing them. The invention is especially applicable as large sized information displays for outdoor use and also in large lounges, sheds, etc. The arrangement of the liquid crystal display modules according to the invention provides the possibility to use narrower seam allowances than with prior art liquid crystal display modules, therefore the seams between different liquid crystal display modules are almost imperceptible. The information presented on displays according to the present invention is readable also in direct sunlight, hence no special arrangements are needed to prevent direct sunlight to access the display. By using the method according to the present invention manufacturing costs can be reduced because the same base plate can be used as a fixing ground, and because the heat sealing is used for connecting the cable to both the liquid crystal display elements and the controllers.

### Brief discussion of the drawings

The invention will now be described in more detail in the following with reference to the appended figures, in which
- Fig. 1: shows as a front view an information display according to an advantageous embodiment of the present invention,
- Fig. 2: shows as a side view a structure of a display module of an information display according to an advantageous embodiment of the present invention, and
- Fig. 3: shows as a front view an information display according to an advantageous embodiment of the present invention comprising an array of display modules.

### Detailed description of the invention

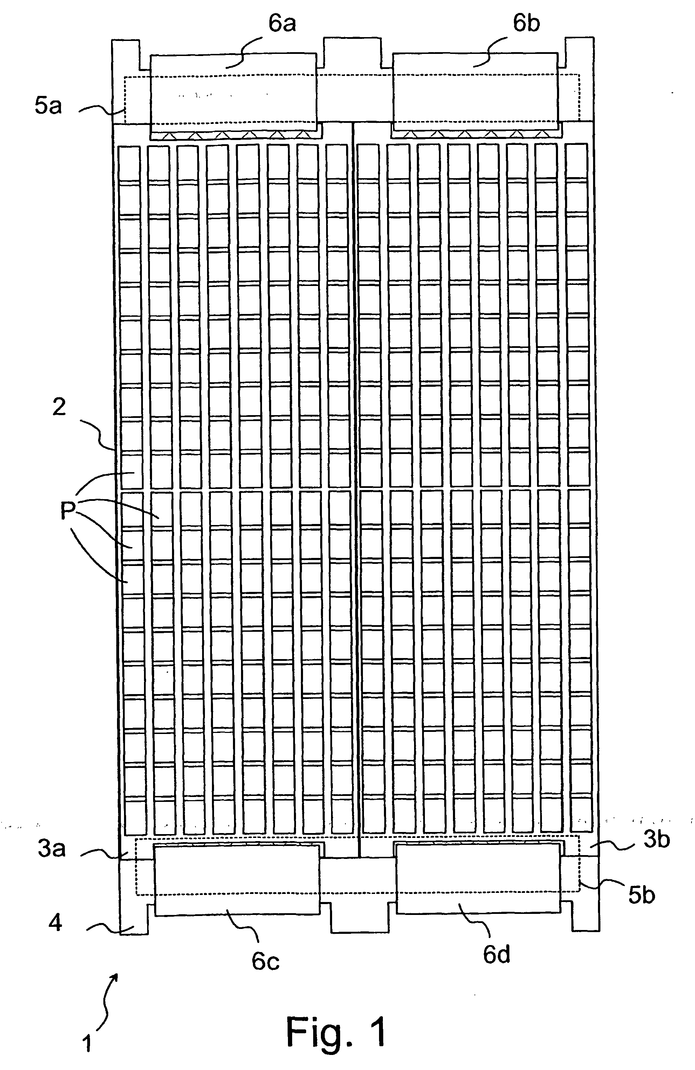

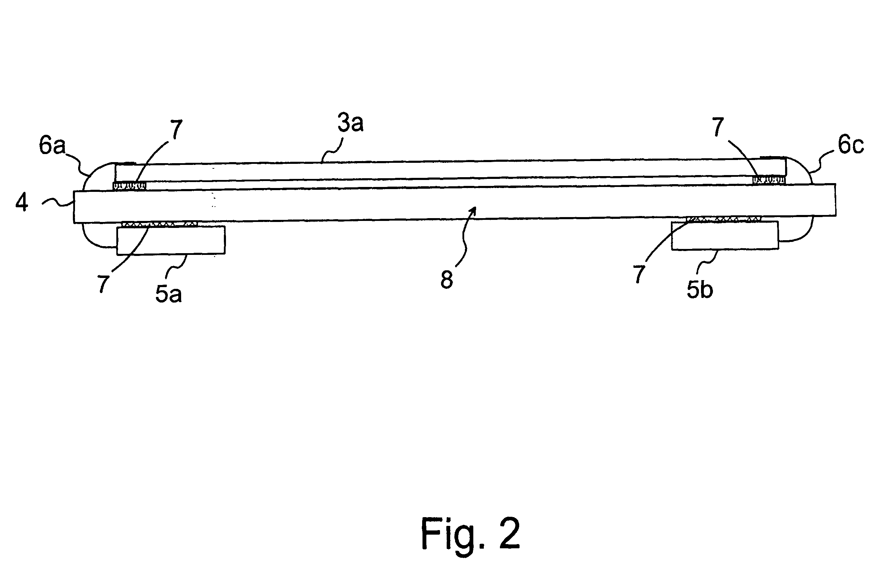

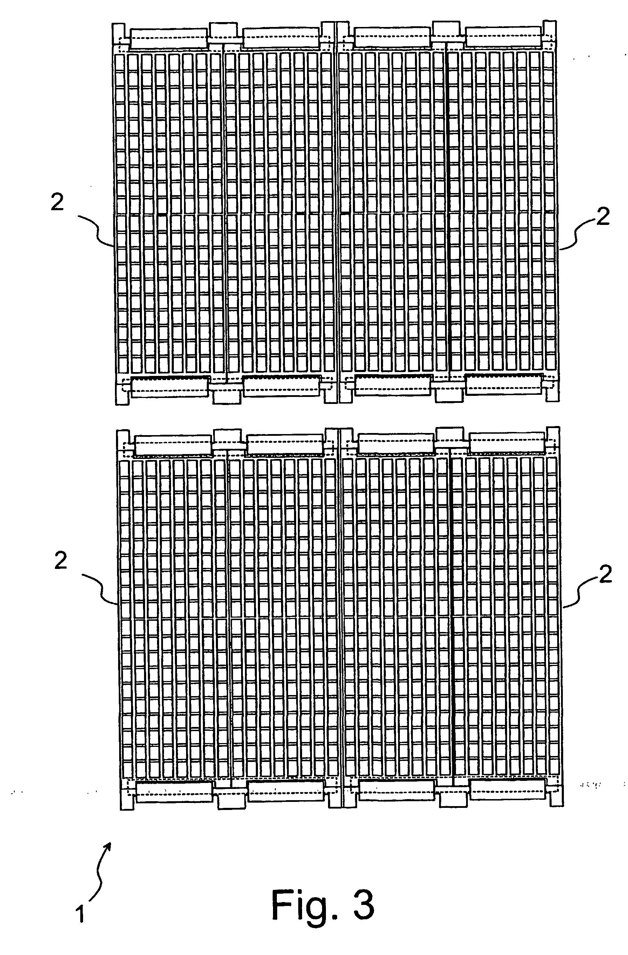

In the following an advantageous embodiment of the present invention will be described with reference to Figs. 1 and 2. The information display 1 comprises at least one display module 2. The display module contains two or more liquid crystal display elements 3a, 3b. In Fig. 1 only two such elements 3a, 3b are shown but it is obvious that in practical implementations the number of liquid crystal display elements can be greater than two. The two liquid crystal display elements 3a, 3b are mounted on the same base plate 4. It is also possible that more than two liquid crystal display elements are mounted on one base plate 4. For example, four or even more liquid crystal display elements can be mounted on one base plate 4. A multiple of the display modules 2 can be placed side by side and/or one above the other to form larger information displays 1. For example, Fig. 3 presents an information display 1 which comprises two rows of display modules 2 and both rows comprise two display modules 2.

In the following the manufacturing method of the information display 1 according to an advantageous embodiment of the present invention will be described. First, the liquid crystal display elements 3a, 3b will be prepared. As it is known by an expert in the field, a liquid crystal display is composed of multiple layers. The top layer is made of a sheet of glass which is coated with a transparent metal oxide film. This metal oxide film acts as an electrode and it can be patterned to form the rows and columns of a passive matrix display or the individual pixels of an active matrix display. These electrodes are used to set up the appropriate voltage across the pixels which affects to the visual properties of the pixels by affecting to the orientation of the crystals in the liquid. A polymer alignment layer is applied under the transparent metal oxide film. Two such sheets of glass are prepared and one is coated with a layer of polymer spacer beads to maintain a uniform gap between the sheets of glass where the liquid crystals are eventually placed. The two glass sheets are then placed together and the edges are sealed *e.g.* with epoxy. A narrow part of the edges, for example a corner, is left unsealed so that the liquid crystal material can be injected under a vacuum between the two glass sheets. Once the display has been filled with liquid crystals, the unsealed part of the edge is sealed and polarizers are applied to the glass surfaces. The detailed structure of the liquid crystal display is not shown in the Figures.

Next in the method according to an advantageous embodiment of the present invention, the necessary wirings between the liquid crystal display elements 3a, 3b and the controllers 5a, 5b are formed. The wirings are advantageously formed by using so called heat sealing technique. This means that the flexible cables 6a, 6b, 6c, 6d are, on one end, heat sealed on the transparent metal oxide film of the liquid crystal display element 3a, 3b and, on the other end, heat sealed on the controller 5a, 5b. The wiring (cables) can be used to transmit control signalling (appropriate voltages) from the controllers 5a, 5b to the pixels of the liquid crystal display elements 3a, 3b.

After the cables are sealed on correct places the liquid crystal display elements 3a, 3b and the controllers 5a, 5b are fixed on a base plate 4. The base plate 4 is made *e.g.* of a plastic sheet or other suitable material. The size of the base plate 4 is slightly larger than the size of one or multiple liquid crystal display elements 3a, 3b. Preferably, the size of the base plate 4 is slightly larger than the size of two parallel liquid crystal display elements 3a, 3b. The liquid crystal display elements 3a, 3b are fixed preferably with glue or double sided tape 7 on one surface 4a of the base plate 4. Respectively, the controllers 5a, 5b are fixed preferably with glue or double sided tape 7 on the opposite surface 4b of the base plate. As mentioned above in the description, the display module 2 can comprise more than one liquid crystal display element, wherein two or more liquid crystal display elements and the controllers necessary to control the liquid crystal display elements are fixed on the same base plate 4.

In addition to provide a fixing ground for the liquid crystal display elements and the controllers, the base plate 4 of the display module 2 provides the appropriate colour for the pixels of the liquid crystal display elements which are set to at least partly transparent state. The base plate 4 also affects to some other optical properties of the pixels. Therefore, at least the colour of the monochromatic information display 1 can be varied by varying the colour of the base plate 4. Hence, the display module 2 can be fixed to *e.g.* a case (not shown) by the base plate 4 without a need to use any separate fixing ground. The fixing can advantageously be performed, for example, by using the upper and lower edges of the base plate 4. The edges can be fixed by appropriate fixing means such as screws, or the edges can be fixed by fitting them on a slot (not shown) or equivalent. It is obvious that there are other fixing methods than the above mentioned examples.

The number of pixels in each liquid crystal display element 3a, 3b may be different in different applications. As a non-restrictive example, each liquid crystal display element 3a, 3b of the information display 1 of Fig. 1 comprise 160 pixels P arranged in a matrix form. In Fig. 1, only some of the pixels are marked with the reference P. The controllers 5a, 5b are arranged to control the pixels in the following way. The first controller 5a controls the upmost 80 pixels (the first 10 rows of 8 pixels) of both the first 3a and the second liquid crystal display elements 3b. Respectively, the second controller 5b controls the lowest 80 pixels (the last 10 rows of 8 pixels) of both the first 3a and the second liquid crystal display elements 3b. It is also possible that there is one controller 5a, 5b provided for each of the liquid crystal display elements 3a, 3b, *i*.*e*. there is equal number of controllers than liquid crystal display elements 3a, 3b, wherein all the pixels of one liquid crystal display element 3a, 3b are controlled by the same controller 5a, 5b.

The information display 1 according to the present invention needs further circuitry to provide information to be displayed on it but such circuitry is know by an expert in the field. Therefore no further description of such circuitry is necessary in this context.

It is also possible to use such liquid crystal display elements with the method according to the invention which are capable to form different colours, *i*.*e*. colour liquid crystal display elements. There are some known techniques to produce different colours. For example, the liquid crystal display elements can have different areas and each of the areas are arranged to produce a certain colour, or it is possible to combine single coloured modules so that each module produces different colour. Yet another alternative is that each pixel of the liquid crystal display element comprises more than one (preferably two or three) independently controllable "subpixel", each producing one colour component. The different colour components are, for example, red, green and blue (RGB). Therefore, by using colour liquid crystal display elements it is possible to produce an information display 1 having capability for presenting information in different colours.

According to yet another advantageous embodiment of the present invention the material of the base plate 4 is so called transflective. In other words, the base plate 4 is at the same time transmissive and reflective. The ambient light travels thru the liquid crystal display elements and reflects back from the base plate 4. The transmissivity of the base plate allows the use of a backlight known as such to provide enough light when the ambient light is not enough for the display. Therefore, the ambient light does not significantly reduce the readability of the display. This arrangement has the advantage that there is no need for separate filters because the base plate 4 is also used as a filter.

A non-transparent layer 8 (Fig. 2) can be used on opposing sides of each adjacent liquid crystal display element 3a, 3b of the display modules to prevent light traversing from one liquid crystal display element 3a, 3b to another liquid crystal display element 3b, 3a. This may in some circumstances increase the contrast of the neighbouring pixels of the adjacent liquid crystal display elements 3a, 3b.

The present invention is not limited to the above described embodiments only, but it can be varied within the scope defined by the attached claims.

## Claims

1. A method of manufacturing a display module (2) comprising the steps of providing a base plate (4) having a first surface (4a) and a second surface (4b),
- mounting on the base plate (4) at least two liquid crystal display elements (3a, 3b) having two sheets of glass, sealed together and having liquid crystals in between and one of the sheets of glass is coated with a transparent metal oxide film for providing pixels (P),
- fixing on the base plate (4) at least one controller (5a, 5b) arranged to control visual properties of said pixels (P) by changing the transparency of the pixels, and
- forming a wiring (6a, 6b, 6c, 6d) between said at least one controller (5a, 5b) and each of the liquid crystal display elements (3a, 3b) to provide signal transferring connection between the controller (5a, 5b) and the pixels (P) of the liquid crystal display elements (3a, 3b),
**characterized in that** the method further comprises a step of forming the base plate (4) from a coloured, transflective material, wherein the base plate (4) provides the colour for a pixel (P), when it is set to at least partly transparent state, and operates as an optical filter.

2. A method according to claim 1 **characterized in that** the wiring is formed by using at least one cable (6a, 6b, 6c, 6d), which is heat sealed on one end to the liquid crystal display element (3a, 3b) and on the other end to the controller (5a, 5b), and **in that** the liquid crystal display element (3a, 3b) is fixed on the first surface (4a) of the base plate (4) and the controller (5a, 5b) is fixed on the second surface (4b) of the base plate (4).

3. A method according to any of the claims 1 to 2, **characterized in that** a double sided tape (7) is used for fixing the liquid crystal display element (3a, 3b) and the controller (5a, 5b) on the base plate (4).

4. A method of forming an information display (1) comprising at least the method of manufacturing a display module (2) according to any of the claims 1 to 3.

5. A display module (2) comprising a base plate (4) having a first surface (4a) and a second surface (4b),
- at least two liquid crystal display elements (3a, 3b) fixed on the base plate (4) the liquid crystal display elements (3a, 3b) having pixels (P) and comprising two sheets of glass, sealed together and having liquid crystals in between,
- at least one controller (5a, 5b) fixed on the base plate (4) arranged to control visual properties of said pixels (P) by changing the transparency of the pixels, and
- wiring (6a, 6b, 6c, 6d) from said at least one controller (5a, 5b) to said at least two liquid crystal display elements (3a, 3b) to provide signal transferring connection between said at least one controller (5a, 5b) and the pixels (P) of the liquid crystal display elements (3a, 3b),
**characterized in that** the base plate (4) comprises coloured material such as to provide the colour for such a pixel (P) which is set to at least partly transparent state, and **in that** the base plate comprises transflective material, wherein the base plate (4) is used as an optical filter.

6. A display module (2) according to claim 5, **characterized in that** the wiring comprises at least one cable (6a, 6b, 6c, 6d), **in that** on one end the cable (6a, 6b, 6c, 6d) is heat sealed to a liquid crystal display element (3a, 3b) and on the other end the cable (6a, 6b, 6c, 6d) is heat sealed to a controller (5a, 5b), and **in that** the liquid crystal display elements (3a, 3b) are fixed on the first surface (4a) of the base plate (4) and the controller (5a, 5b) is fixed on the second surface (4b) of the base plate (4).

7. A display module (2) according to any of the claims 5 to 6, **characterized in that** it comprises at least two liquid crystal display elements (3a, 3b) and equal number of controllers (5a, 5b), and **in that** one controller (5a, 5b) is arranged to control all the pixels (P) of one liquid crystal display element (3a, 3b).

8. A display module (2) according to claim 7, **characterized in that** all liquid crystal display elements (3a, 3b) and controllers (5a, 5b) are fixed on the same base plate (4).

9. A display module (2) according to any of the claims 5 to 6, **characterized in that** it comprises at least a first controller (5a) and a second controller (5b) for controlling the pixels of the liquid crystal display elements (3a, 3b), **in that** the pixels of each liquid crystal display elements (3a, 3b) are divided into a first group of pixels and a second group of pixels, and **in that** the first controller (5a) is arranged to control the first group of pixels of each liquid crystal display element (3a, 3b) and the second controller (5b) is arranged to control the second group of pixels of each liquid crystal display element (3a, 3b)

10. An information display (1) comprising at least one display module (2) according to any of the claims 5 to 9.

11. An information display (1) according to claim 10, **characterized in that** the wiring comprises at least one cable (6a, 6b, 6c, 6d), **in that** on one end the cable (6a, 6b, 6c, 6d) is heat sealed to a liquid crystal display element (3a, 3b) and on the other end the cable (6a, 6b, 6c, 6d) is heat sealed to a controller (5a, 5b), and **in that** the liquid crystal display elements (3a, 3b) are fixed on the first surface (4a) of the base plate (4) and the controller (5a, 5b) is fixed on the second surface (4b) of the base plate (4).

12. An information display (1) according to any of the claims 10 to 11, **characterized in that** the liquid crystal display elements (3a, 3b) are colour liquid crystal display elements (3a, 3b).

13. An information display (1) according to any of the claims 10 to 12, **characterized in that** the wiring (6a, 6b, 6c, 6d) comprises a flat cable.

## Patentansprüche

1. Ein Verfahren zur Herstellung eines Anzeigemoduls (2) umfassend die Schritte
- Bereitstellen einer Grundplatte (4), die eine erste Oberfläche (4a) und eine zweite Oberfläche (4b) aufweist,
- Anbringen auf der Grundplatte (4) von mindestens zwei Flüssigkristall-Anzeige-Elementen (3a, 3b) die zwei Schichten aus Glas aufweisen, miteinander versiegelt und mit Flüssigkristallen dazwischen, und wobei eine der Schichten aus Glas mit einem transparenten Metalloxid-Film beschichtet ist, um Bildpunkte (P) bereitzustellen,
- Befestigen mindestens einer Steuereinheit (5a, 5b) auf der Grundplatte (4), welche eingerichtet ist zur Steuerung der visuellen Eigenschaften der genannten Bildpunkte (P) auf der Grundplatte (4), und
- Bilden einer Verdrahtung (6a, 6b, 6c, 6d) zwischen der genannten mindestens einen Steuereinheit (5a, 5b) und jedem der Flüssigkristall-Anzeige-Elemente (3a, 3b), um zwischen der Steuereinheit (5a, 5b) und den Bildpunkten (P) der Flüssigkristall-Anzeige-Elemente (3a, 3b) eine Verbindung zur Signalübertragung zu erstellen
**dadurch gekennzeichnet, dass** das Verfahren zudem einen Schritt des Bildens der Grundplatte (4) aus einem farbigen, transflektiven Material umfasst, wobei die Grundplatte (4) die Farbe für einen Bildpunkt (P) bereitstellt, wenn dieser in einen zumindest teilweise transparenten Zustand versetzt wird, und als ein optischer Filter wirkt.

2. Ein Verfahren nach Anspruch 1, **dadurch gekennzeichnet, dass** die Verdrahtung unter Verwendung mindestens eines Kabels (6a, 6b, 6c, 6d) gebildet wird, das an einem Ende mit dem Flüssigkristall-Anzeige-Element (3a, 3b) und am anderen Ende mit der Steuereinheit (5a, 5b) hitzeversiegelt wird, und **dadurch**, dass das Flüssigkristall-Anzeige-Element (3a, 3b) an der ersten Oberfläche (4a) der Grundplatte (4) und die Steuereinheit (5a, 5b) an der zweiten Oberfläche (4b) der Grundplatte (4) befestigt wird.

3. Ein Verfahren nach irgendeinem der Ansprüche 1 bis 2, **dadurch gekennzeichnet, dass** ein doppelseitiges Klebeband (7) zur Befestigung des Flüssigkristall-Anzeige-Elements (3a, 3b) und der Steuereinheit (5a, 5b) auf der Grundplatte (4) verwendet wird.

4. Ein Verfahren zur Bildung einer Informationsanzeige (1) umfassend mindestens das Verfahren zur Herstellung eines Anzeigemoduls (2) nach irgendeinem der Ansprüche 1 bis 3.

5. Ein Anzeigemodul (2) umfassend
- eine Grundplatte (4), die eine erste Oberfläche (4a) und eine zweite Oberfläche (4b) aufweist,
- mindestens zwei Flüssigkristall-Anzeige-Elemente (3a, 3b), befestigt auf der Grundplatte (4), wobei die Flüssigkristall-Anzeige-Elemente (3a, 3b) Bildpunkte (P) aufweisen und zwei Schichten aus Glas umfassen, miteinander versiegelt und mit Flüssigkristallen dazwischen,
- mindestens eine auf der Grundplatte (4) befestigte Steuereinheit (5a, 5b), eingerichtet zur Steuerung der visuellen Eigenschaften der genannten Bildpunkte (P) durch Änderung der Transparenz der Bildpunkte, und
- eine Verdrahtung (6a, 6b, 6c, 6d) von der genannten mindestens einen Steuereinheit (5a, 5b) zu den genannten mindestens zwei Flüssigkristall-Anzeige-Elementen (3a, 3b), um zwischen der genannten mindestens einen Steuereinheit (5a, 5b) und den Bildpunkten (P) der Flüssigkristall-Anzeige-Elemente (3a, 3b) eine Verbindung zur Signalübertragung bereitzustellen,
**dadurch gekennzeichnet, dass** die Grundplatte (4) farbiges Material umfasst, um die Farbe für einen solchen Bildpunkt (P) zu bereitzustellen, der in einen zumindest teilweise transparenten Zustand versetzt ist, und **dadurch**, dass die Grundplatte transflektives Material umfasst, wobei die Grundplatte (4) als ein optischer Filter dient.

6. Ein Anzeigemodul (2) nach Anspruch 5, **dadurch gekennzeichnet, dass** die Verdrahtung mindestens ein Kabel (6a, 6b, 6c, 6d) umfasst, dass das Kabel (6a, 6b, 6c, 6d) an einem Ende mit einem Flüssigkristall-Anzeige-Element (3a, 3b) hitzeversiegelt ist und das Kabel (6a, 6b, 6c, 6d) am anderen Ende mit einer Steuereinheit (5a, 5b) hitzeversiegelt ist, und **dadurch**, dass die Flüssigkristall-Anzeige-Elemente (3a, 3b) an der ersten Oberfläche (4a) der Grundplatte (4) befestigt sind und die Steuereinheit (5a, 5b) an der zweiten Oberfläche (4b) der Grundplatte (4) befestigt ist.

7. Ein Anzeigemodul (2) nach irgendeinem der Ansprüche 5 bis 6, **dadurch gekennzeichnet, dass** es mindestens zwei Flüssigkristall-Anzeige-Elemente (3a, 3b) und die gleiche Anzahl Steuereinheiten (5a, 5b) umfasst, und **dadurch**, dass eine Steuereinheit (5a, 5b) so eingerichtet ist, dass sie alle Bildpunkte (P) eines Flüssigkristall-Anzeigen-Elementes (3a, 3b) steuert.

8. Ein Anzeigemodul (2) nach Anspruch 7, **dadurch gekennzeichnet, dass** alle Flüssigkristall-Anzeige-Elemente (3a, 3b) und Steuereinheiten (5a, 5b) auf der gleichen Grundplatte (4) befestigt sind.

9. Ein Anzeigemodul (2) nach irgendeinem der Ansprüche 5 bis 6, **dadurch gekennzeichnet, dass** es mindestens eine erste Steuereinheit (5a) und eine zweite Steuereinheit (5b) für die Steuerung der Bildpunkte der Flüssigkristall-Anzeige-Elemente (3a, 3b) umfasst, dass die Bildpunkte jedes Flüssigkristall-Anzeige-Elements (3a, 3b) in eine erste Gruppe von Bildpunkten und eine zweite Gruppe von Bildpunkten aufgeteilt sind, und **dadurch**, dass die erste Steuereinheit (5a) so eingerichtet ist, dass sie die erste Gruppe von Bildpunkten jedes Flüssigkristall-Anzeige-Elements (3a, 3b) steuert, und dass die zweite Steuereinheit (5b) so eingerichtet ist, dass sie die zweite Gruppe von Bildpunkten jedes Flüssigkristall-Anzeige-Elements (3a, 3b) steuert.

10. Eine Informationsanzeige (1) umfassend mindestens ein Anzeigemodul (2) nach irgendeinem der Ansprüche 5 bis 9.

11. Eine Informationsanzeige (1) nach Anspruch 10, **dadurch gekennzeichnet, dass** die Verdrahtung mindestens ein Kabel (6a, 6b, 6c, 6d) umfasst, dass das Kabel (6a, 6b, 6c, 6d) an einem Ende mit einem Flüssigkristall-Anzeige-Element (3a, 3b) hitzeversiegelt ist und das Kabel (6a, 6b, 6c, 6d) am anderen Ende mit einer Steuereinheit (5a, 5b) hitzeversiegelt ist, und **dadurch**, dass die Flüssigkristall-Anzeige-Elemente (3a, 3b) an der ersten Oberfläche (4a) der Grundplatte (4) befestigt sind und die Steuereinheit (5a, 5b) an der zweiten Oberfläche (4b) der Grundplatte (4) befestigt ist.

12. Eine Informationsanzeige (1) nach irgendeinem der Ansprüche 10 bis 11, **dadurch gekennzeichnet, dass** die Flüssigkristall-Anzeige-Elemente (3a, 3b) Farb-Flüssigkristall-Anzeige-Elemente (3a, 3b) sind.

13. Eine Informationsanzeige (1) nach irgendeinem der Ansprüche 10 bis 12, **dadurch gekennzeichnet, dass** die Verdrahtung (6a, 6b, 6c, 6d) ein flaches Kabel umfasst.

## Revendications

1. Une méthode de fabrication d'un module d'affichage (2) comprenant les étapes de
- fournir une plaque de base (4) ayant une première surface (4a) et une deuxième surface (4b),
- monter d'au moins deux éléments d'affichage à cristaux liquides (3a, 3b) sur la plaque de base (4), ces deux éléments d'affichage à cristaux liquides (3a, 3b) ayant deux feuilles de verre scellées ensemble et ayant des cristaux liquides entre-elles, et une des feuilles de verre étant revêtue d'une couche d'oxyde métallique transparent pour fournir des pixels (P),
- fixer d'au moins une unité de commande (5a, 5b) sur la plaque de base (4), cette unité de commande (5a, 5b) étant agencée pour commander les propriétés visuelles desdits pixels (p) en changeant la transparence des pixels, et
- former d'un câblage (6a, 6b, 6c, 6d) entre ladite au moins une unité de commande (5a, 5b) et chacun des éléments d'affichage à cristaux liquides (3a, 3b) pour fournir une connexion de transfert de signal entre l'unité de commande (5a, 5b) et les pixels (P) des éléments d'affichage à cristaux liquides (3a, 3b),
**caractérisée en ce que** la méthode comprend en outre une étape pour former la plaque de base (4) à partir d'un matériau coloré et transflectif, où la plaque de base (4) fournit la couleur pour un pixel (P) quand il est défini dans un état au moins partiellement transparent, et fonctionne en tant que filtre optique.

2. Une méthode selon la revendication 1, **caractérisée en ce que** le câblage est constituée en employant au moins un câble (6a, 6b, 6c, 6d) qui est thermoscellé à une extrémité à l'élément d'affichage à cristaux liquides (3a, 3b) et à l'autre extrémité à l'unité de commande (5a, 5b) et **en ce que** l'élément d'affichage à cristaux liquides (3a, 3b) est fixé sur la première surface (4a) de la plaque de base (4) et l'unité de commande (5a, 5b) est fixée sur la deuxième surface (4b) de la plaque de base (4).

3. Une méthode selon une des revendications de 1 à 2, **caractérisée en ce que** une bande à double face (7) est employée pour fixer l'élément d'affichage à cristaux liquides (3a, 3b) et l'unité de commande (5a, 5b) sur la plaque de base (4).

4. Une méthode pour former un affichage d'information (1) comprenant au moins la méthode de fabrication d'un module d'affichage (2) selon une des revendications de 1 à 3.

5. Un module d'affichage (2) comprenant
- une plaque de base (4) ayant une première surface (4a) et une deuxième surface (4b),
- au moins deux éléments d'affichage à cristaux liquides (3a, 3b) fixés sur la plaque de base (4), les éléments d'affichage à cristaux liquides (3a, 3b) ayant des pixels (P) et comprenant deux feuilles de verre, scellées ensemble et ayant des cristaux liquides entre-elles,
- au moins une unité de commande (5a, 5b) fixée sur la plaque de base (4), agencée pour commander les propriétés visuelles desdits pixels (P) en changeant la transparence des pixels, et
- un câblage (6a, 6b, 6c, 6d) allant de ladite au moins une unité de commande (5a, 5b) auxdits au moins deux éléments d'affichage à cristaux liquides (3a, 3b) pour fournir une connexion de transfert de signal entre ladite au moins une unité de commande (5a, 5b) et les pixels (P) des éléments d'affichage à cristaux liquides (3a, 3b),
**caractérisé en ce que** la plaque de base (4) comprend un matériau coloré de façon à fournir la couleur pour un tel pixel (P) qui est défini dans un état au moins partiellement transparent et **en ce que** la plaque de base comprend un matériau transflectif, où la plaque de base (4) est utilisée en tant que filtre optique.

6. Un module d'affichage (2) selon la revendication 5, **caractérisé en ce que** le câblage comprend au moins un câble (6a, 6b, 6c, 6d) et **en ce que** le câble (6a, 6b, 6c, 6d) est thermoscellé à un élément d'affichage à cristaux liquides (3a, 3b) à une extrémité et le câble (6a, 6b, 6c, 6d) est thermoscellé à une unité de commande (5a, 5b) à l'autre extrémité et **en ce que** les éléments d'affichage à cristaux liquides (3a, 3b) sont fixés sur la première surface (4a) de la plaque de base (4) et l'unité de commande (5a, 5b) est fixée sur la deuxième surface (4b) de la plaque de base (4).

7. Un module d'affichage (2) selon une des revendications de 5 à 6, **caractérisé en ce qu'**il comprend au moins deux éléments d'affichage à cristaux liquides (3a, 3b) et un nombre égal d'unités de commande (5a, 5b) et **en ce qu'**une unité de commande (5a, 5b) est agencée pour commander tous les pixels (P) d'un élément d'affichage à cristaux liquides (3a, 3b).

8. Un module d'affichage (2) selon la revendication 7, **caractérisé en ce que** tous les éléments d'affichage à cristaux liquides (3a, 3b) et les unités de commande (5a, 5b) sont fixés sur la même plaque de base (4).

9. Un module d'affichage (2) selon une des revendications de 5 à 6, **caractérisé en ce qu'**il comprend au moins une première unité de commande (5a) et une deuxième unité de commande (5b) pour commander les pixels des éléments d'affichage à cristaux liquides (3a, 3b) et **en ce que** les pixels de chaque élément d'affichage à cristaux liquides (3a, 3b) sont divisés en un premier groupe de pixels et en un deuxième groupe de pixels et **en ce que** la première unité de commande (5a) est agencée pour commander le premier groupe de pixels de chaque élément d'affichage à cristaux liquides (3a, 3b) et la deuxième unité de commande (5b) est agencée pour commander le deuxième groupe de pixels de chaque élément d'affichage à cristaux liquides (3a, 3b).

10. Un affichage d'information (1) comprenant au moins un module d'affichage (2) selon une des revendications de 5 à 9.

11. Un affichage d'information (1) selon la revendication 10, **caractérisé en ce que** le câblage comporte au moins un câble (6a, 6b, 6c, 6d) et **en ce que** le câble (6a, 6b, 6c, 6d) est thermoscellé à un élément d'affichage à cristaux liquides (3a, 3b) à une extrémité et le câble (6a, 6b, 6c, 6d) est thermoscellé à une unité de commande (5a, 5b) à l'autre extrémité et **en ce que** les éléments d'affichage à cristaux liquides (3a, 3b) sont fixés sur la première surface (4a) de la plaque de base (4) et l'unité de commande (5a, 5b) est fixée sur la deuxième surface (4b) de la plaque de base (4).

12. Un affichage d'information (1) selon une des revendications de 10 à 11, **caractérisé en ce que** les éléments d'affichage à cristaux liquides (3a, 3b) sont des éléments d'affichage à cristaux liquides de couleur (3a, 3b).

13. Un affichage d'information (1) selon une des revendications de 10 à 12, **caractérisé en ce que** le câblage (6a, 6b, 6c, 6d) comprend un câble plat.
